# EUROPEAN PATENT APPLICATION

(11) **EP 4 667 111 A1**
(43) Date of publication of application: **24.12.2025**
(21) Application number: 24182484.6
(22) Date of filing: 17.06.2024
(51) Int. Cl.: B04B 1/08, B04B 7/14, B04B 9/04, B04B 9/12, F16C 19/06, F16C 19/54, F16C 27/06, F16C 33/30, F16C 33/32, B04B 15/02

(54) **A CENTRIFUGAL SEPARATOR**

(71) Applicant: Alfa Laval Corporate AB, 221 00 Lund (SE)
(72) Inventor: HENRIKSSON, Roland, SE-125 33 ÄLVSJÖ (SE); THORWID, Peter, SE-172 66 SUNDBYBERG (SE); EKSTRÖM, Anders, SE-187 67 TÄBY (SE)
(74) Representative: Alfa Laval Attorneys

(57) **Abstract**

The present invention provides a centrifugal separator (1) for separating at least one liquid phase from a liquid feed mixture. The separator is comprising a rotatable portion (10), a stationary portion (2) and a drive motor (4) arranged for rotating the rotatable portion (10) relative said stationary portion (2) around an axis of rotation (X). The rotatable portion (10) comprises a centrifuge bowl (10a) and a rotatable shaft (7) onto which said centrifuge bowl (10) is mounted. The centrifuge bowl (10a) comprises a separation space (9a), in which surface enlarging inserts (17) are arranged, an inlet (11) for supply of the liquid feed mixture, at least one liquid outlet (12, 13) for discharge of a separated liquid phase. At least one bearing (5, 6) is mounted to the rotatable portion (10) to facilitate its rotation, wherein said at least one bearing (5,6) is a grease-lubricated bearing.

## Description

### Field of the Invention

The present invention relates to the field of high-speed centrifugal separators, and more specifically to the journalling of the rotating shaft of the centrifugal separator.

### Background of the Invention

High speed centrifugal separators are generally used for separation of liquids and/or for separation of solids from a liquid. During operation, liquid mixture to be separated is introduced into a rotating centrifuge bowl and heavy particles or denser liquid accumulates at the periphery of the rotating bowl whereas less dense liquid accumulates closer to the central axis of rotation. This allows for collection of the separated fractions, e.g. by means of different outlets arranged at different radii from the rotational axis. Separation members, such as a stack of frustoconical separation discs, are usually used within the rotating bowl in order to enhance the separation performance. An example of a high-speed centrifugal separator is described in patent application EP 3315205.

Centrifugal separators commonly comprise a centrifuge bowl mounted to a typically vertical spindle driven by a drive motor located beneath the centrifuge bowl. The bearing suspensions of a high-speed separator are traditionally lubricated by oil, such as oil droplets or an oil mist. The high rotational speed and the high operating temperatures in combination with a service life demand of several thousands of hours have required this. The oil used for lubrication needs to be transported to the bearings and in the case of an oil mist, also be generated inside the separator. Finally, the oil used for lubrication needs to be transported back to an oil sump. However, it has been a difficult task to make lubrication systems work properly. The bearings may often be over-lubricated leading to high temperatures in the bearing. Further, there is always a risk of oil leakage inside the separator.

Thus, there is a need in the art for improved solutions for lubricating the bearing s of a centrifugal separator.

### Summary of the Invention

A main object of the present invention is to provide a centrifugal separator with an improved bearing solution.

As a first aspect of the invention, there is provided a centrifugal separator for separating at least one liquid phase from a liquid feed mixture comprising.
a rotatable portion, a stationary portion and a drive motor arranged for rotating the rotatable portion relative said stationary portion around an axis of rotation,
wherein the rotatable portion comprises a centrifuge bowl and a rotatable shaft onto which said centrifuge bowl is mounted,
wherein the centrifuge bowl comprises a separation space, in which surface enlarging inserts are arranged, an inlet for supply of the liquid feed mixture, at least one liquid outlet for discharge of a separated liquid phase,
and further wherein at least one bearing is mounted to the rotatable portion to facilitate its rotation, wherein said at least one bearing is a grease-lubricated bearing.

As used herein, the term "axially" denotes a direction which is parallel to the rotational axis (X). Accordingly, relative terms such as "above", "upper", "top", "below", "lower", and "bottom" refer to relative positions along the rotational axis (X). Correspondingly, the term "radially" denotes a direction extending radially from the rotational axis (X), and relative terms such as "inner" and "outer" refer to relative positions along the radial direction.

The at least one bearing is mounted to the rotatable portion of the centrifugal separator. The rotatable portion may in addition to the centrifuge bowl comprise a rotatable shaft, onto which the centrifuge bowl is mounted. The at least one bearing may be mounted to the rotatable shaft.

A grease lubricated bearing is a bearing in which grease is the major or only lubricant for reducing friction in the bearing. Grease is thus a solid or semi solid lubricant, e.g. formed as a dispersion of thickening agent in a liquid lubricant. A grease lubricant is usually made of three primary components; the base oil, a thickener (usually a soap), and additives (such rust inhibitors).

As an example, the grease of the grease-lubricated bearing may be any grease from the ISO 6743-9:2003 standard *"Lubricants, industrial oils and related products (class L)* - *classification* - *part 9: family X (greases)".*

As an example, the grease could be a lithium-based grease , i.e. have lithium as a thickener.

The first aspect of the invention is based on the insight that grease lubricated bearings may indeed be used in a centrifugal separator without the need for further lubricating means. This is against a general teaching in the art, in which the vibrations and the high-speeds - and thus high temperatures - generally experienced in a centrifugal separator have been considered to give a negative influence on grease life. Further, the rotatable shaft in a centrifugal separator is vertical, meaning that lubricating grease may over time accumulate on the lower portions of the raceways, leaving the upper portion of the raceways empty of grease and thereby reducing the lifetime of the bearing further. The inventors have thus found that, against the prejudice in the field of centrifugal separators, that a grease lubricated bearing may be suitable for a centrifugal separator.

In embodiments of the first aspect, the centrifugal separator has no dedicated lubrication source other than the grease for lubricating the at least one bearing.

Thus, the grease may be the only lubricant for the at least one bearing. The grease may be the initial grease present in the bearing when mounting the bearing to the centrifugal separator. Accordingly, the at least one bearing may be pre-filled with grease before operation.

In embodiments, the centrifugal separator has no internal system for refilling grease. Thus, the at least one bearing may be a sealed bearing, and either the bearing itself or the centrifugal separator may free of any no function for refilling the at least one bearing with grease.

In embodiments of the first aspect, the at least one bearing comprises at least one ceramic bearing element, such as a plurality of ceramic bearing elements.

A bearing element is a rolling element of the bearing, usually arranged between an inner and outer raceway. The bearing elements may thus be rolling bearing elements.

As an example, the at least one bearing comprises.
an inner ring connected to the rotatable portion of the centrifugal separator and forming a rounded inner raceway,
an outer ring connected to the stationary portion of the centrifugal separator and forming a rounded outer raceway,
a plurality of ceramic bearing elements engaged between the inner raceway and the outer raceway.

The inner and outer ring, and also the inner and outer raceway, may be of a metallic material, such as steel. The bearing may be a hybrid bearing, which is the is the common name for a roller bearing with steel raceways and ceramic balls.

The at least one bearing may be arranged in a bearing housing, and such bearing housing may be connected to the stationary portion of the centrifugal separator. Thus, the outer ring may be rigidly connected to the bearing housing.

As an example, the plurality of ceramic bearing elements may be balls or other roller bearing elements.

Thus, the at least one bearing may be a ball bearing. Other roller bearing elements may for example be in the form of cylindrical elements.

As an example, the ceramic bearing elements comprises silicon nitride (Si₃N₄).

The inventors have found that using ceramic bearing elements, such as silicon nitride, which are stiffer than steel and thereby leading to a smaller elliptic contact area between the balls and the raceways during operation, is beneficial in combination with grease-lubrication. This is due to the small contact area has the effect that less lubricant may be involved to build up the required hydro dynamic film. This in turn leads to a slower oxidation process for the lubrication grease and lower operating temperatures, and hence a longer lifetime for the grease. It has been found that the combination of grease lubrication and hybrid bearings, the grease life may at least be increased with a factor of three.

In embodiments of the first aspect, the at least one bearing is a super precision bearing.

A super precision bearing is the common name for a roller bearing produced with improved accuracy and stiffness and having properties that make it possible to run at very high speeds. In the context of the present disclosure, a super precision bearing has a standard precision level of ABEC 7 or higher (ABEC scale =Annular Bearing Engineers' Committee industry accepted standard for the tolerances of a ball bearing).

As an example, the at least one bearing may be a grease-lubricated bearing that is a super precision bearing having ceramic bearing elements. Such bearing has been tested and a bearing life of around 10000 hours have been achieved in a centrifugal separator running at 12000 rpm.

In embodiments of the first aspect, the at least one bearing is an angular contact bearing, such as an angular contact bearing that is a super precision bearing.

In an angular contact ball bearings, the inner and outer ring raceways are displaced relative to each other in the direction of the bearing axis, thereby allowing the bearing to accommodate both radial and axial loads. The weight of the load may be transferred between the rings, through the balls, along a specific contact angle.

It is an advantage to use an angular contact bearing in a high-speed centrifugal separator due to the rather long and thin rotatable shaft onto which the heavy centrifuge bowl is mounted. In other words, the bearing arrangement of a centrifugal separator experience both large radial and axial loads.

Furthermore, the inventors have found that the rather high axial preload of an angular contact bearing makes the whole bearing construction stiff during use, thereby probably increasing the lifetime of the lubricating grease.

The drive motor is arranged to rotate the centrifuge bowl around the axis of rotation. The drive motor may comprise an electrical motor - such as an electrical motor having its motor rotor arranged around the rotatable shaft. Alternatively, the drive motor may be provided beside the rotatable shaft and rotate the rotatable portion of the centrifugal separator by a suitable transmission, such as a belt or a gear transmission.

In embodiments of the first aspect, the drive motor is an electrical motor comprising a motor stator and a motor rotor. The motor rotor may be directly connected to the rotatable shaft so that the motor rotor and rotatable shaft are coaxial. In such a directly driven centrifugal separator, ceramic bearing elements may serve as electrical insulation, thereby reducing the risk of currents generated by the electrical motor going through the bearing. This in turn reduces the risk of sparks being generated at the bearing.

In embodiments of the first aspect, the drive motor is arranged to rotate the rotatable portion at a rotational speed of at least 4000 rpm, such as at least 6000 rpm.

In embodiments of the first aspect, the drive motor and the rotatable shaft are mounted in the centrifugal separator as a co-vibrating unit during operation of the centrifugal separator.

Thus, the drive motor, e.g. also including a motor housing, may carry out the same movements as the rotatable shaft during operation of the centrifugal separator as co-vibrating unit. This may lead to a misalignment between rotatable shaft and drive motor of less than a minute of an arc. The inventors have found that the improved alignment of the inner and outer raceways of the bearing due to the mounting of the drive motor and the rotatable shaft as a co-vibrating unit results in a significantly increased grease life.

The use of one or several angular contact bearings in combination with a co-vibrating system will further increase the stiffness and therefore minimize the angular misalignment between the inner and outer raceways of the bearings. This is advantageous since the grease lubricant will be contained inside the bearings more effectively, and cannot leak out.

As an example, the drive motor may be an electrical motor comprising a motor stator and a motor rotor, and wherein the motor rotor is directly connected to the rotatable shaft, and wherein the at least one bearing is rigidly connected to the drive motor. This may arrange the rotatable shaft and the drive motor as a co-vibrating unit. Hence, the at least bearing may be connected without any elastic element to the drive motor. Further, the at least one bearing may be rigidly attached to the rotatable shaft.

As an example, the drive motor may comprise a motor housing and the at least one bearing may be mounted directly to the motor housing.

A portion of the motor housing may thus function as the bearing seat. As an example, an upper cover portion may function as a bearing seat to which the bearing is rigidly connected.

Further, the at least one bearing may be arranged in a bearing housing, and the bearing housing may be rigidly connected to the drive motor, such as to the motor housing.

In embodiments of the first aspect, the centrifugal separator further comprises a cooling system for cooling the at least one bearing.

The inventors have found that a requirement for a sufficiently long grease life may be to control the bearing temperature. The greased bearings may be permanently sealed and contain a very small amount of grease lubricant. It a low bearing temperature may provide for the small amount of grease bearing to last long enough for a centrifugal separator. It is believed that a 15 °C increase in bearing temperature may approximately reduce the bearing life by 50%.

As an example, the cooling system may be arranged for keeping the temperature of the at least one bearing at 70 °C or less, such as at 60 °C or less.

The cooling system may comprise water for cooling the at least one bearing, or air.

The cooling system may be arranged for cooling the outer ring of the at least one bearing.

As an example, the cooling system may also be used for cooling the drive motor. Accordingly, the motor cooling system may also be used for cooling the at least one bearing.

In embodiments of the first aspect, at least one bearing has an inner diameter of at least 70 mm.

If the outer diameter is over 70 mm, it is an extra advantage in using ceramic bearing elements, since the centrifugal force and therefore also the risk of "skidding" - where the rolling bearing elements slips along the raceway for a short period of time - is high. The ceramic bearing elements have a lower density than traditional steel bearing elements, which is why the risk of skidding is reduced.

However, in other embodiments, the inner diameter is smaller, such as at least 40, or at least 50 mm.

In embodiments of the first aspect, the at least one bearing comprises at least 10 ceramic bearing elements, such as at least 15 ceramic bearing elements. In addition, the ceramic bearing elements may be relatively small. As an example, the ceramic bearing elements may be balls having a diameter of less than 40 mm, such as less than 30 mm.

In embodiments of the first aspect, the centrifugal separator comprises at least two bearings, such as at least three bearings, wherein each bearing is a grease-lubricated bearing.

In addition, the at least two, or at least three, bearings may be of the same type, such as at least two, or at least three, grease-lubricated angular contact bearings comprising ceramic bearing elements. Having bearings of the same type may facilitate service and manufacturing of the centrifugal separator.

In embodiments of the first aspect, the rotatable shaft is a hollow shaft arranged for supply of said liquid feed mixture to the centrifuge bowl and/or for discharge of a separated liquid phase from the centrifuge bowl.

Alternatively, the hollow shaft may be arranged for supply of any other process liquid to the centrifugal separator, such as pressurized liquid used for intermittently open solid outlets or for supply of cooling liquid.

Using a hollow spindle allows for cooling of the inner ring of the at least one bearing via a portion of the hollow shaft. Thus, in embodiments of the first aspect, the centrifugal separator comprises a cooling system for cooling the inner ring of the at least one bearing, and wherein the cooling system comprises a cooling channel within the hollow spindle.

The centrifugal separator of the first aspect is for separation of a liquid feed mixture. The liquid feed mixture may be an aqueous liquid or an oily liquid. As an example, the centrifugal separator may be for separating solids and one or two liquids from the liquid feed mixture.

The centrifugal separator comprises a stationary portion and a rotatable portion.

The stationary portion may in turn comprise a frame in which the drive motor is arranged as well as a hood covering the centrifuge bowl. The centrifuge bowl of the separator may be arranged to be rotated around vertical axis of rotation, i.e. the axis of rotation may extend vertically. The centrifuge bowl is mounted on a rotatable shaft and thus mounted to rotate together with the shaft.

The centrifuge bowl encloses by it walls a separation space. The separation space, in which the separation of the fluid mixture takes place, comprises surface enlarging inserts, i.e. separation members that may be in the form of a stack of separation discs. The separation discs may e.g. be of metal. Further, the separation discs may be frustoconical separation discs, i.e. having separation surfaces forming frustoconical portions of the separation discs. The separation discs may be arranged coaxially around the axis of rotation at a distance from each other such that to form passages between each two adjacent separation discs.

The centrifuge bowl also comprises an inlet for supply liquid mixture to be separated (the liquid feed mixture). This inlet may be arranged for receiving the liquid feed mixture and be arranged centrally in the centrifuge bowl, thus at the rotational axis. The centrifuge bowl may be arranged to be fed from the bottom, such as through a rotating shaft onto which the centrifuge bowl is mounted. However, the centrifuge bowl may also be arranged to be fed from the top, such as through a stationary inlet pipe extending into the bowl to the inlet.

Further, the at least one liquid outlet for a separated liquid phase may be in the form of one or two liquid outlets. Such liquid outlets for separated liquid phase or phases may be arranged at the top or the bottom of the centrifugal separator.

The centrifugal separator may also be arranged for discharging a solid phase, either continuously or intermittently, as known in the art.

As a second aspect of the invention, there is provided a method of separating at least one liquid phase from a liquid feed mixture comprising the steps of:
- Providing a centrifugal separator according to the first aspect,
- Supplying a liquid feed mixture to the inlet of the centrifuge bowl,
- Discharging at least one liquid phase from the centrifuge bowl.

### Brief description of the Drawings

The above, as well as additional objects, features and advantages of the present inventive concept, will be better understood through the following illustrative and nonlimiting detailed description, with reference to the appended drawings. In the drawings like reference numerals will be used for like elements unless stated otherwise.
Figure 1 shows a schematic drawing of a centrifugal separator.
Figure 2 shows a schematic drawing of grease-lubricated bearing.
Figure 3 shows a schematic drawing of a cross-section of an angular contact bearing.
Figure 4 shows a schematic drawing of a drive motor of the centrifugal separator.

### Detailed Description

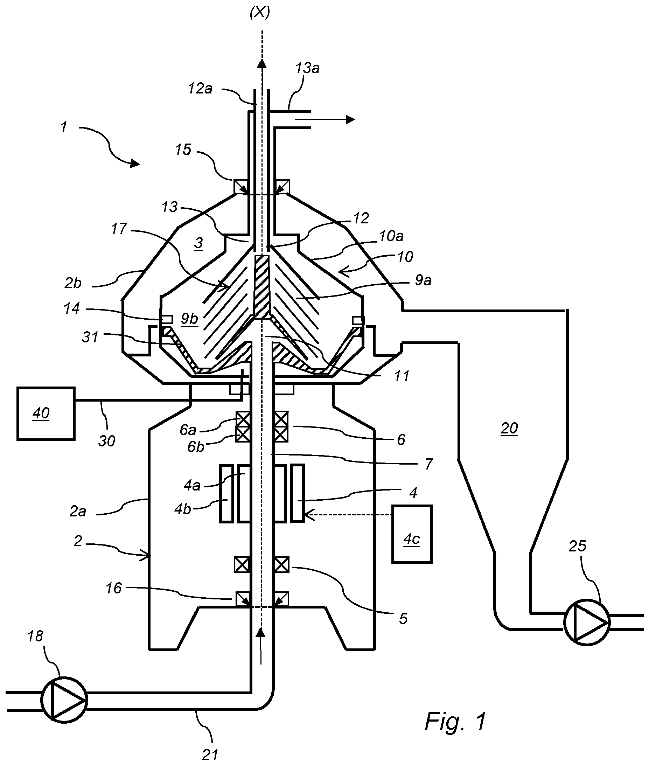

Fig. 1 shows a cross-section of an embodiment of a centrifugal separator 1 which in this embodiment is arranged to separate a solid phase, a liquid heavy phase and a liquid light phase from a liquid feed mixture.

The centrifugal separator 1 comprises a stationary portion 2 and a rotatable portion 10. The stationary portion 2 of the centrifugal separator 1 comprises a lower frame 2a and a stationary hood 2b that surrounds at least the upper portion of the centrifuge bowl 10a. The hood 2b thus defines at least part of a surrounding space 3 in which the centrifuge bowl 10a is arranged.

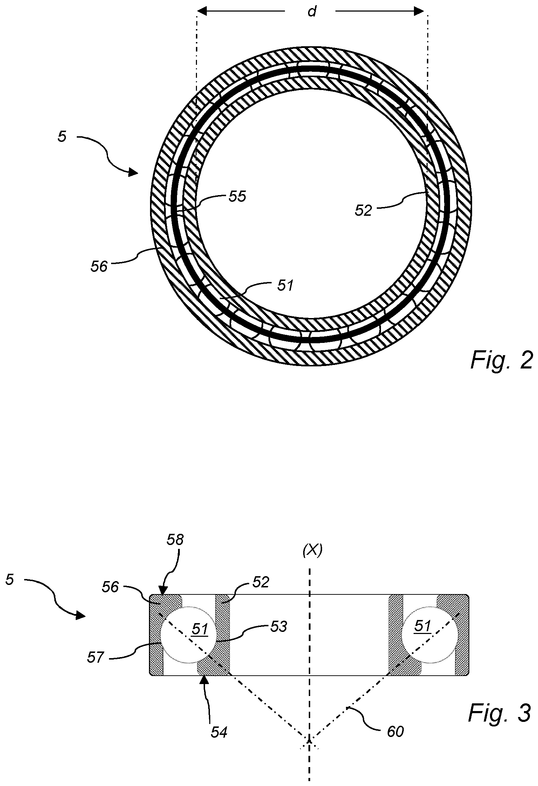

The rotatable portion 10 comprises a centrifuge bowl 10a and rotatable shaft 7 in the form of a spindle. The centrifuge bowl 10a is mounted on the upper end of the spindle 7 and thus arranged to rotate around an axis of rotation (X) together with spindle 7. The rotatable portion is supported by a bottom bearing 5 and an upper bearing system 6. In this example, the upper bearing system 6 actually comprises two bearings 6a, 6b connected in series, one axially above the other. At least one of the bearings - such as all three bearings 5, 6a, 6b- are grease-lubricated bearings. A grease-lubricated bearing 6 having ceramic bearing elements will be explained further in relation to Figs. 2-4 below. In this example, the bearings are arranged axially on both sides of the drive motor 4. However, in other embodiments, all bearings are arranged axially on one side of the drive motor 4, such as all arranged axially above the drive motor 4.

The centrifuge bowl 10a forms within itself a separation space 9a in which centrifugal separation of the liquid feed mixture takes place during operation. The separation space 9a within the centrifuge bowl 10a is provided with a stack of frustoconical separation discs 17 in order to achieve effective separation of the liquid feed mixture, such as separation discs disclosed in EP3315203.

The spindle 7 is in this example a hollow spindle that is used for introducing the liquid feed mixture to the inlet 11 of the centrifuge bowl 10. The inlet 11 and the hollow spindle is sealed by an inlet seal 16 to a stationary inlet pipe 21. The centrifuge bowl 10 further comprises a liquid outlet 12 for discharging a separated liquid light phase and a liquid outlet 13 for discharging a liquid heavy phase. The liquid light phase outlet 12 is arranged at a smaller radius than the liquid heavy phase outlet 13. There is further a stationary outlet pipe 12a connected to the liquid light phase outlet 12 for receiving the separated liquid light phase, and a stationary outlet pipe 13a connected to the liquid heavy phase outlet 13 for receiving the separated liquid heavy phase. The liquid outlets 12, 13 are sealed to stationary outlet pipes 12a, 13a, using an outlet seal 15. The inlet 16 and/or outlet 15 seal could be in the form of a mechanical seal.

The centrifuge bowl 10a further comprises a solid phase outlet 14 for discharging a separated solid phase that has accumulated in sludge space 9b - located radially outside separation space 9a - to the surrounding space 3. In this example, the solid phase outlet 14 takes the form of a plurality of intermittently openable sludge outlets arranged at the outer periphery of the centrifuge bowl 10a. The solid phase outlets 14 form part of an intermittent discharge system and the opening and closing of the sludge outlets 14 is controlled by the axial movements of operating slide 31 arranged within the bowl 10a. The operating slide 31 is thus movable between a closed position in which the sludge outlets 14 are closed, and an open position, in which sludge outlets 14 are open. Actuation of the operating slide is performed by supply of operating water - such as opening water and closing water - via one or several lines line 30 to the centrifuge bowl 10a. In this example, the operating water is supplied via an operating water module (OWM) 40. During operation of the centrifugal separator 1 closing water supplied by the OWM 40 acts on the operating slide 31 to close the outlets 14. The draining of the closing water - and thereby opening of the sludge outlets 14 - is initiated by introducing opening water to the bowl 10a to axially displace sliding bowl bottom axially downwards for fractions of a second.

Discharged solid phase is collected under the hood 2 and further directed to vessel 20. The vessel 20 is in the form of a cyclone and thus arranged for collecting the separated solid phase discharged from the centrifuge bowl 10. The vessel 20 is further connected to a discharge device 25 in the form of a sludge pump for discharge of sludge and liquid present in the vessel 20.

The centrifugal separator 1 further comprises a drive motor 4 configured to rotate the spindle 7 and the centrifuge bowl 10 around the axis of rotation (X). The drive motor 4 is an electrical motor arranged to rotate the rotatable portion 10 at a rotational speed of at least 4000 rpm. The electric motor comprises a motor stator 4b that is connected to the stationary portion and a motor rotor 4a that is directly connected to the spindle 7. In other words, the motor rotor 4a and the rotatable portion 10 of the separator 1 have the same rotational axis (X). In addition, the centrifugal separator further comprises a variable frequency drive (VFD) 4c for controlling the speed and torque of the drive motor 4.

During operation of the separator in Fig. 1, the centrifuge bowl 10a is caused to rotate by torque transmitted from the drive motor 4 to the spindle 7. Via the stationary inlet pipe 21, liquid mixture to be separated is supplied to the hollow spindle 7 and inlet 11 using the inlet feed pump 18. From there, the liquid mixture to be separated is brought into the separation space 9a and further between the separation discs of the disc stack that is fitted in the separation space 9a. A separated liquid light phase moves radially inwards between the separation discs and is discharged via the liquid light phase outlet 12 to the stationary outlet pipe 12a. Heavier components in the liquid mixture, e.g. solid particles and the liquid heavy phase, move radially outwards between the separation discs, so that the liquid heavy phase is discharged via the liquid heavy phase outlet 13 to the stationary outlet pipe 13a. The separated solid phase accumulates in the sludge space 9b and is emptied intermittently from the solid phase outlets 14 by actuating the operating slide 41 to move axially downwards for fractions of a second. Actuation of the operating slide is performed by the supply of pressurized water from the OWM 40 via line 30, as known in the art.

The centrifugal separator 1 of the present invention may be any type of high-speed centrifugal separator for separating the liquid feed mixture, such as a separator for separating the liquid feed mixture into a single liquid phase and a solid phase, a separator in which the solid phase is retained in the centrifuge bowl or a separator in which the separated solid phase is continuously ejected from the centrifuge bowl 10a.

Figure 2 shows an embodiment of a bearing that may be used as one of the upper bearings 6a, 6b or the lower bearing 5. The bearing comprises a metallic inner ring 52 that is firmly connected to the rotatable hollow shaft 7 and a metallic outer ring 56 that is connected to the stationary portion 2 of the centrifugal separator 1. A plurality of roller bearing elements 51 in the form of balls are disposed in the space between the inner 52 and outer 56 ring. The outer surface of the inner ring 52 forms a rounded inner raceway 53, and the inner surface of the outer ring 56 forms a rounded outer raceway 57, and the plurality of roller bearing elements 51 are engaged and in rolling contact with the inner 53 and outer 57 raceways, i.e. the roller bearing elements 51 are adapted to roll on the inner 53 and/or outer 57 raceways during operation. In this example, roller bearing elements 51 are guided by a bearing retainer, or cage, 55, e.g. made of a plastic material, such as polyamide, which is arranged radially between the inner 52 and outer 53 rings.

A plurality, or all, of the roller bearing elements 51 are ceramic bearing elements 51, preferably comprising or consisting of silicon nitride (Si₃N₄). In this example, the bearing comprises at least 15 silicon nitride balls, each having a diameter of less than 40 mm. The bearing 5 is a grease-lubricated bearing, i.e. there is a small amount of grease lubricating the bearing elements 51. This grease may be pre-filled and sealed before use of the bearing 5. Thus, the bearing 5 may further comprise a seal (not shown) for retaining the grease and protecting the grease from the outside environment of the bearing 5. The seal may for example be a lip seal made of a polymeric material.

The use of a bearing having ceramic bearing elements 51 have been found to increase the lifetime of the grease used for lubrication.

In this example, the centrifugal separator 1 has no dedicated lubrication source other than the grease for lubricating the bearings 5, 6.

The bearing 5 is further a super-precision bearing having a standard precision level of ABEC 7 or higher.

Moreover, the bearing 5 is in this example an angular contact bearing. Such bearing is further discussed in relation to Fig. 3, which shows a cross-section of a grease-lubricated angular contact bearing 5 that may be used in the centrifugal separator 1 of the present invention. The angular contact ball bearing 5 is arranged such that the inner 53 and outer 57 raceways are displaced relative to each other in the direction of the rotational axis (X). This is due to the presence of an axially upper shoulder 58 on the outer ring 56 and an axially lower shoulder 54 on the inner ring 52, which both forms at least part of the outer 57 and inner 53 raceways. Or, in other words, a lower shoulder is missing on one of the rings and an upper shoulder is missing on the other ring, as compared to a regular deep groove ball bearing. With such an oblique arrangement in the direction of the rotational axis, the forces are transmitted from one raceway to the other at a defined contact angle, as indicated by line 60. The angular contact bearing 5 is thereby designed to accommodate combined loads, i.e. simultaneously acting radial and axial loads.

As an example, both the lower bearing 5 as well as the bearings 6a, 6b of the upper bearing system 6 may be grease-lubricated angular contact bearings. Shown in these Figures are single row angular contact bearings, but angular contact bearings having several rows of bearing elements - such as double row bearing elements - may be used as well. If single row angular contact bearings are used, the bearings 6a and 6b may be mounted in a set, i.e. a set in which one bearing is arranged axially directly on top of the other. In such cases, the set of single row angular contact bearings 6a, 6b may be mounted in tandem-, O- or X-arrangement, as known in the art. The arrangement of the bearing set may depend on the overall design of the centrifugal separator 1, e.g. if the load carrying capacity of one bearing 6a, 6b is not sufficient or if combined or axial loads occur in both directions.

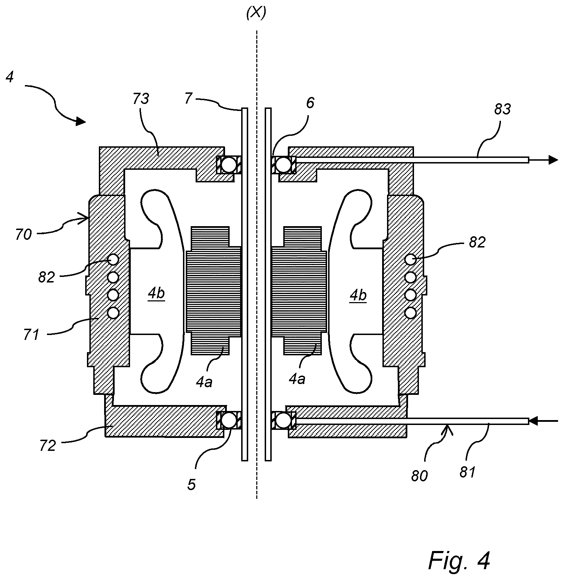

Fig. 4 shows some more details of the drive motor 4 of the centrifugal separator 1 and how the grease-lubricated bearings may be mounted in the centrifugal separator 1. The drive motor 4 is an electrical motor comprising a motor stator 4a and a motor rotor 4a, and the motor rotor 4a is directly mounted to the rotatable shaft 7, which in this example is in the form of is a hollow spindle. The motor stator 4b and motor rotor 4a are mounted within motor housing 7, which comprises a surrounding sidewall 71, an upper cover 73 and a lower support structure 72. There is one grease-lubricated bearing 5, 6, e.g. as discussed in relation to Figs. 2 and 3 above, mounted on each axial side om the motor rotor 4a. However, in other embodiments, all bearings 5, 6 could be mounted on the same axial side, such as all being mounted above the motor rotor 4a.

The rotatable shaft 7 is mounted in the centrifugal separator 1 as a co-vibrating unit, meaning that the motor 4, including motor housing 70, follows the movements of the rotatable shaft 7 during operation of the centrifugal separator 1. This is due to the bearings 5, 6 being rigidly connected to the drive motor 4 and also rigidly connected to the spindle.

In this example, the upper bearing 6 is mounted directly to the upper cover 73 of the motor housing 70. Thus, the upper cover 70 functions as a bearing seat for the upper bearing 6, and there is no elastic element between upper bearing 6 and the motor housing 70. Further, the inner ring 52 of the upper bearing 6 is rigidly mounted to the rotatable shaft 7.

Due to the use of an angular contact bearing in combination with a co-vibrating system/motor, the stiffness will increase and thereby minimize the angular misalignment between the inner 53 and outer 57 raceways of the bearings 5, 6. This will decrease the risk of bearing grease leaking out, thus increasing the lifetime of the bearings 5, 6.

Moreover, the lower bearing 5 is mounted directly to the lower support structure 72 of the motor housing 70. Thus, the lower support structure 72 functions as a bearing seat for the lower bearing 5, and there is no elastic element between lower bearing 5 and the motor housing 70. Further, the inner ring 52 of the lower bearing 6 is rigidly mounted to the rotatable shaft 7.

The centrifugal separator 1 further comprises a cooling system 80 for cooling the grease-lubricated bearings 5,6. As seen in Fig 4, the cooling system 80 has an inlet line 81 extending within the lower support structure 72 for supply of cooling media to the outer ring 56 of the lower bearing 5. The cooling system 80 may for example be a cooling system for supply of cooling water, i.e. the cooling media may be water. The cooling system further comprises a cooling outlet line 83 extending within the upper cover 73 of the motor housing 70 so that cooling media may exit the motor housing after cooling he outer ring 56 of the upper bearing 6.

In this embodiment, the cooling system 80 is also arranged for cooling the drive motor 4. Therefore, the cooling inlet line 81 and cooling outlet line 82 is further connected to cooling coils 82 extending within surrounding sidewall 71 of the motor housing 70 for cooling the motor stator 4b.

Thus, cooling media may be supplied via inlet line 1, pass the lower bearing 6, be guided within cooling coils 82, pass the upper bearing 6 before been led out from motor housing 70 via outlet line 83.

The invention is not limited to the embodiments disclosed but may be varied and modified within the scope of the claims set out below. The invention is not limited to the type of separator as shown in the Figures. The term "centrifugal separator" also comprises centrifugal separators with a substantially horizontally oriented axis of rotation.

## Claims

1. A centrifugal separator (1) for separating at least one liquid phase from a liquid feed mixture comprising
a rotatable portion (10), a stationary portion (2) and a drive motor (4) arranged for rotating the rotatable portion (10) relative said stationary portion (2) around an axis of rotation (X),
wherein the rotatable portion (10) comprises a centrifuge bowl (10a) and a rotatable shaft (7) onto which said centrifuge bowl (10) is mounted,
wherein the centrifuge bowl (10a) comprises a separation space (9a), in which surface enlarging inserts (17) are arranged, an inlet (11) for supply of the liquid feed mixture, at least one liquid outlet (12, 13) for discharge of a separated liquid phase,
and further wherein at least one bearing (5, 6) is mounted to the rotatable portion (10) to facilitate its rotation, wherein said at least one bearing (5,6) is a grease-lubricated bearing.

2. A centrifugal separator (1) according to claim 1, wherein the centrifugal separator has no dedicated lubrication source other than the grease for lubricating the at least one bearing (5,6).

3. A centrifugal separator (1) according to any previous claim, wherein the at least one bearing (5,6) comprises at least one ceramic bearing element (51).

4. A centrifugal separator (1) according to claim 3, wherein said at least one bearing (5,6) comprises
an inner ring (52) connected to the rotatable portion (10) of the centrifugal separator (1) and forming a rounded inner raceway (53),
an outer ring (56) connected to the stationary portion (2) of the centrifugal separator (1) and forming a rounded outer raceway (57),
a plurality of ceramic bearing elements (51) engaged between the inner raceway (53) and the outer raceway (57).

5. A centrifugal separator (1) according to any previous claim, wherein the plurality of ceramic bearing elements (51) is balls or other roller bearing elements.

6. A centrifugal separator (1) according to claim 5, wherein the ceramic bearing elements (51) comprises silicon nitride (Si₃N₄).

7. A centrifugal separator (1) according to any previous claim, wherein the at least one bearing (5,6) is a super precision bearing.

8. A centrifugal separator (1) according to claim 7, wherein the drive motor (4) and the rotatable shaft (7) are mounted in the centrifugal separator (1) as a co-vibrating unit during operation of the centrifugal separator (1)

9. A centrifugal separator (1) according to claim 8, wherein the drive motor (4) is an electrical motor comprising a motor stator (4b) and a motor rotor (4a), and wherein the motor rotor (4a) is directly connected to the rotatable shaft (7),
and wherein the at least one bearing is rigidly connected to the drive motor (4).

10. A centrifugal separator according to claim 9, wherein the drive motor comprises a motor housing (70) and wherein the at least one bearing is mounted directly to the motor housing (70).

11. A centrifugal separator (1) according to any previous claim, wherein the centrifugal separator further comprises a cooling system (80) for cooling the at least one bearing (5,6).

12. A centrifugal separator (1) according to claim 11, wherein the cooling system (80) is also used for cooling the drive motor (4).

13. A centrifugal separator (1) according to any previous claim, wherein the at least one bearing (5,6) has an inner diameter of at least 70 mm.

14. A centrifugal separator (1) according to any previous claim, wherein the centrifugal separator (1) comprises at least two bearings (5,6), such as at least three bearings (5,6), wherein each bearing (5,6) is a grease-lubricated bearing.

15. A centrifugal separator (1) according to any previous claim, wherein the rotatable shaft (7) is a hollow shaft arranged for supply of said liquid feed mixture to the centrifuge bowl (10a) or for discharge of a separated liquid phase from the centrifuge bowl (10a).
